# EUROPEAN PATENT SPECIFICATION

(11) **EP 2 424 940 B1**
(45) Date of publication and mention of the grant of the patent: **09.03.2016**
(21) Application number: 10770189.8
(22) Date of filing: 27.04.2010
(51) Int. Cl.: C08L 53/02, C08L 23/10, C08K 5/00, C08L 71/12, C08L 25/04, C08K 5/49, C08L 23/00, H01B 7/00, H01B 7/29

(54) **FLAME RETARDANT THERMOPLASTIC ELASTOMERS**
FLAMMHEMMENDE THERMOPLASTISCHE ELASTOMERE
ÉLASTOMÈRES THERMOPLASTIQUES RETARDATEURS DE FLAMME

(30) Priority: 29.04.2009 US 173668 P
(43) Date of publication of application: 07.03.2012
(73) Proprietor: PolyOne Corporation, Avon Lake, OH 44012 (US)
(72) Inventor: GU, Jiren, Naperville Illinois 60565 (US)
(74) Representative: Winter, Brandl, Fürniss, Hübner, Röss, Kaiser, Polte - Partnerschaft mbB
(86) International application number: PCT/US2010/032485
(87) International publication number: WO 2010/126855

(56) References cited:
- WO-A2-2004/011504
- WO-A2-2008/106363
- JP-A- 11 199 716
- US-A1- 2006 131 050
- US-A1- 2008 251 271
- US-A1- 2010 012 373

## Description

### CLAIM OF PRIORITY

This application claims priority from U.S. Provisional Patent Application Serial Number 61/173,668 bearing Attorney Docket Number 12009007 and filed on April 29, 2009, which is incorporated by reference.

### FIELD OF THE INVENTION

This invention relates to thermoplastic elastomers, polymer compounds which exhibit elasticity while remaining thermoplastic, which are flame retardant and contain polyphenylene ether.

### BACKGROUND OF THE INVENTION

The world of polymers has progressed rapidly to transform material science from wood and metals of the 19^{th} Century to the use of thermoset polymers of the mid-20^{th} Century to the use of thermoplastic polymers of later 20^{th} Century.

Thermoplastic elastomers (TPEs) combine the benefits of elastomeric properties of thermoset polymers, such as vulcanized rubber, with the processing properties of thermoplastic polymers.

Thermoplastic elastomers presently are prepared from fossil-fuel derived polymer resins, such as styrene block copolymers (SBCs), thermoplastic vulcanizates (TPV), thermoplastic olefins (TPO), copolyesters (COPE), thermoplastic urethanes (TPU), copolyamide (COPA), and most recently olefin block copolymers (OBCs).

Recently thermoplastic elastomers have included polyphenylene ether (PPE). Two examples are found in U.S. Pat. Nos. 6,838,503 (Yin et al.) and 7,005,465 (Sato). But the formulations disclosed in these two patents apparently do not have sufficient elongation to satisfy Underwriters' Laboratory Test 62 (UL 62), which requires, among other things, more than 200% tensile elongation before aging and retention of more than 75% of that tensile elongation after aging at 121°C for 168 hours or preferably at 136°C for 168 hours. Another example of a poly(arylene)ether composition is disclosed in WO 2008/106363.

### SUMMARY OF THE INVENTION

The art needs a TPE made from PPE that passes the entire requirements of the UL 62 test, especially with respect to tensile elongation (a) before and (b) after undergoing thermal aging as described above, (c) a wire and cable deformation of less than 50% after undergoing weighted, thermal aging at 150°C for one hour, and (d) the VW-1 vertical cable burn.

The present invention has found a unique combination of ingredients to make a non-halogen, non-red phosphorous flame retardant TPE containing PPE which passes all parts of the UL 62 test.

Significantly, the flame retardant can be non-halogen and still satisfy all parts of the UL 62 test. It has been found that the thermoplastic elastomer of the present invention can be flexible, stretchy, flame retardant without halogens or red phosphorus, and soft.

Even more specifically, the non-halogenated flame retardant can be solid particles which are not sensitive to water, which is important for underwater resistivity of plastic articles made from the TPE and provide long term flame retardant properties and continued good mechanical properties in the presence of water or high humidity. Also, solid particle flame retardants used for this invention have no negative effect on the elasticity of the TPE.

The TPEs of the present invention have a good surface appearance, can be made at high extrusion speeds comparable to what is used for polyvinyl chloride (PVC) wire and cable insulation and jacketing (even using the same screw design as used for PVC production), and can pass the even more stringent European Union 70°C/ 48hr underwater insulation resistance requirement. The TPEs also have excellent underwater thermal aging which requires endurance after underwater exposure to 70°C for 168 hours.

The present invention solves the problem of finding a commercially practical non-halogenated flame retardant TPE made from PPE which is flexible, durable, and has a before-aging tensile elongation of >200% and an after-aging tensile elongation residual of more than 75%, passes 150°C deformation test and VW-1 flame test among other testing requirements according to the UL 62 test. This new TPE passes the tests sufficient to be useful as insulation, jacketing, or both for wire and cable, including especially alternating current (AC) wire and cable insulation and jacketing.

"Wire and cable" is an industry term for a line of axial length which conducts electricity or other electromagnetic signals and is protected by electric insulation layers, jacketing layers, or both. Therefore, whether in the form of wire or in the form of cable, the term "protected electrical line" will be used to denote either or both.

One aspect of the invention is a thermoplastic elastomer compound, comprising from about 10 to about 60 weight percent of a polyphenylene ether; from about 10 to about 60 weight percent of a hydrogenated styrenic block copolymer; from about 5 to about 30 weight percent of at least one solid non-halogen flame retardant selected from the group consisting of organo-phosphinate, melamine polyphosphate, and combinations thereof; and from about 5 to about 40 weight percent of a nucleated olefinic polymer; wherein the compound has a before-aging tensile elongation of >200% and an after-aging tensile elongation residual of at least 75%, according to the Underwriters' Laboratory test UL 62 test.

Another aspect of the invention is a plastic article molded or extruded from the TPE of the present invention.

Another aspect of the invention is a protected electrical line, comprising (a) wire or cable having an axial length and (b) at least one layer of the TPE of the present invention enveloping at least a portion of the axial length of the wire or cable.

Features of the invention will become apparent with reference to the following embodiments.

### EMBODIMENTS OF THE INVENTION

### Polyphenylene Ether

PPE, also known as poly(2,6-dimethylphenol), is a well known thermoplastic resin marketed commercially by a variety of companies.

As explained by Yin et al., non-limiting examples of types of PPE can include poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-l,4-phenylene ether), poly(2,6-dimethoxy -1,4-phenylene ether), poly(2,6-di(chloro methyl)-1,4-phenylene ether), poly(2,6-di(bromo methyl)-1,4-phenylene ether), poly(2,6-diphenyl-1,4-phenylene ether), poly(2,6-ditoluyl -1,4-phenylene ether), poly(2,6-dichloro-1,4-phenylene ether), poly(2,6-dibenzyl-1,4-phenylene ether), poly(2,5-dimethyl-1,4-phenylene ether), and combinations thereof.

Commercial PPE resins are often a blend of polyphenylene ether with an aromatic vinyl group thermoplastic resin.

Also as explained by Yin et al., non-limiting examples of the aromatic vinyl group thermoplastic resin can include homopolymers of styrene or its derivatives, as well as copolymers of styrene and p-methyl styrene, alpha-methyl styrene, alpha-methyl-p-methyl styrene, chlorostyrene, bromostyrene, etc. The rubber-modified polystyrene (HIPS) formed from 70 to 99% by weight of aromatic vinyl compound mentioned above and 1 to 30% by weight of diene rubber, can also be used. Examples of the diene rubber used in HIPS include homopolymers of conjugated diene group compounds such as butadiene, isoprene, chloroprene, etc.; copolymers of conjugated diene group compounds and unsaturated nitro compounds or aromatic vinyl compounds; as well as natural rubber, etc. These can be used in the form of one type or in the form of mixture of two or more than two types. Poly butadiene-butadiene-styrene copolymer is often preferred. HIPS can be obtained by methods such as emulsification polymerization, suspension polymerization, lump state polymerization, solution polymerization, or by combining these methods. Additional examples of aromatic vinyl group resins include styrene-acrylonitrile-acrylate copolymer, FPDM group rubber-modified polystyrene, acrylate rubber-modified styrene-acrylonitrile copolymer and others.

Virtually any commercial PPE is a candidate for use in this invention, over a wide range of molecular weights. Of the various commercially available PPEs, two are already known to be useful. One is Blendex 820 brand sold by Chemtura and is not a blend of PPE with another polymer. The other is Bluestar brand PPE sold by Bluestar of Yuncheng, China. It also is not a blend.

### Thermoplastic Elastomer

Because PPE is generally brittle or at least more brittle than can be tolerated for wire and cable uses, a thermoplastic elastomer is needed to add flexibility to the PPE.

Any commercial thermoplastic elastomer fundamentally is a candidate for use to render the PPE more flexible. Styrene block copolymers (SBC) as a class are acceptable for making the TPE more flexible. Preferably, a highly hydrogenated SBC is used. Non-limiting examples of highly hydrogenated SBCs include styrene-ethylene butylene-styrene polymers, styrene-ethylene propylene-styrene polymers, hydrogenated styrene-isoprene block copolymers, and hydrogenated styrene-butadiene block copolymers, and combinations of them.

The preferred thermoplastic elastomer is a styrenic block copolymer, more preferably one which is hydrogenated such as styrene-ethylene-butylene-styrene (SEBS) or styrene-ethylene-ethylene-propylene-styrene (SEEPS) in a variety of grades.

There are two types of thermoplastic elastomers useful for this invention: those which require the presence of plasticizing oil and those which do not.

The first type of hydrogenated TPE which requires plasticizing oil should have a weight average molecular weight of between about 70,000 and about 160,000 with a preferred molecular weight of about 100,000. The ratio of styrenic end-block to olefinic mid-block should range from about 20/80 to about 40/60, and preferably about 30/70.

The second type of hydrogenated TPE which does not require plasticizing oil should have a weight average molecular weight of less than about 230,000 and styrenic end-block content of less than about 22%. Also, the mid-block can have a relatively higher vinyl content than typical SEBS TPEs.

Hydrogenated styrene block copolymers are commercially available from a number of sources, preferably the Kraton G brand series from Kraton Polymers. Of the various G grades, Kraton G1642, Kraton G1643 (for non-oil formulations), Kraton G1650, Kraton G1652, and Kraton G1654H are desirable. Also Kraton MD6945 SEBS (for non-oil formulations) is useful. Also Septon 4033 SEEPS, which has a similar molecular weight and size of styrenic end-blocks as Kraton G1650, and Kuraray Q1250, a proprietary block copolymer with a different endblock than styrene, can be used.

### Solid Non-Halogenated Flame Retardant

The TPE for use as wire and cable insulation or jacketing or both must be flame retardant to satisfy building requirements and codes for mammalian-occupied spaces.

The marketplace in recent years has preferred to use non-halogenated flame retardants because in a fire such flame retardants do not release chlorine-containing compounds or bromine-containing compounds.

One type of non-halogenated flame retardant is red phosphorus or chemicals containing red phosphorus. This type is also currently discouraged in the market and in building requirements and codes.

Therefore, to avoid both halogenated flame retardants and red phosphorus, the TPEs of the present invention employ either organo-phosphinates or melamine polyphosphates or both. These two types of flame retardants are solid particles which are particularly suitable for use in the TPE compounds of the present invention because they are far less likely to migrate within the compound after it has been finally formed into a plastic article such as a sleeve of insulation or jacketing for a wire or a cable. Also as explained above, these two types of solid non-halogenated flame retardants contribute to underwater resistivity, durability in high humidity conditions, etc.

Organo-phosphinate is commercially available as a proprietary compound from Clariant Corporation marketed under the brands Exolit OP 930, Exolit OP 935, Exolit OP 1311, Exolit OP 1312, and Exolit OP 1230.

These organo-phosphinates are also useful as synergists for other flame retardant materials, such as melamine polyphosphate or polyammonium polyphosphate or proprietary equivalent performers such as Amfine FP-2100J from Amfine Chemical Corporation. Each of these latter flame retardant materials alone is not very effective at low concentration in the TPE formulation, but a blend of the organo-phosphinate in a small amount with any of them is very effective for flame retardancy even if the total concentration of flame retardants remains minor.

It is believed that a combination of organo-phosphinate and melamine polyphosphate offers the best performance at reasonable cost. in wire and cable insulation or jacketing when striving to pass the underwater thermal aging test and underwater insulation resistance test because neither of the chemicals is overtly sensitive to water.

Melamine polyphosphate is commercially available both from Hangzhou JLS Flame Retardants Chemicals Co., Hangzhou Zhejiang, China as JLS-PNA and JLS-PNB brand flame retardant additives and from Ciba Specialty Chemicals as Melaspur 200 brand flame retardant additive.

Flame retardants of polyammonium polyphosphate (APP) or a blend including polyammonium polyphosphate are commercially available both from Hangzhou JLS Flame Retardants Chemicals Co. as APP, PNP1C, and PNP1D brand flame retardant additives and from Clariant as Exolit AP422, Exolit AP 462, Exolit AP760, and Exolit AP766 brand flame retardant additives. Another major APP supplier is Budenheim of Germany. Amfine FP-2100J and FP-2200 are proprietary nitrogen-phosphorous based flame retardant products from Amfine Chemical Corporation.

One of the disadvantages of the TPE compounds disclosed by Yin et al. and Sato is that their compound apparently does not have a tensile elongation before aging of more than 200% and did not report performance of 150°C heat deformation or tensile elongation retention after thermal aging, these properties being required by the UL 62 safety standard. While not limited to a particular theory, it is believed that the use by Yin et al. and Sato of liquid non-halogenated flame retardant(s) is at least a contributing factor to the failure to have a tensile elongation before aging of more than 200%.

### Nucleated Olefinic Polymer

The TPE of the present invention benefits from an amount of nucleated olefinic polymer, preferably a nucleated polypropylene homopolymer, to assist in processing of the TPE into its final shape and to contribute to the 150°C heat deformation heat resistance of the plastic article made from the TPE. Any commercially available nucleated olefinic polymer is a candidate for use in the TPE. A commercial example of a nucleated polypropylene homopolymer is Formolene 5144L brand polypropylene from Formosa Plastics. A second example is a nucleated homo-polypropylene PP1043N (5 Melt Flow Index) from ExxonMobil.

### Tackifier

A tackifier, also known as a midblock SBC modifier, is also used in the TPE. Any commercially available tackifier is a candidate for use in the TPE. Non-limiting examples of tackifiers include Escorez 5000 series tackifiers, such as Grades 5340 and 5320 from ExxonMobil Chemicals; Regalite R1125, Regalite R1100, Regalrez 1139, Regalrez 1126, Regalrez 1094, Plastolyn R1140, Eastotac H 140-W, and Eastotac H125-W tackifiers from Eastman Chemicals; and Arkon P100, Arkon P115, Arkon P125, and Arkon P140A tackifiers from Arakawa Chemicals. Presently preferred as a tackifier is Plastolyn R1140 tackifier from Eastman Chemicals.

### Optional Oil

As stated above, depending on the type of hydrogenated styrenic block copolymer used, plasticizing oil may be necessary to improve flow and flexibility of the resulting TPE. Any oil conventionally used to plasticize a SBC is a candidate for use, such as mineral oil, vegetable oil, synthetic oil, etc. A presently preferred oil is Drakeoil 600 brand oil from Drake Oil Co. of Syracuse, New York, USA.

### Optional Additives

The thermoplastic elastomer compounds of the present invention can include conventional plastics additives in an amount that is sufficient to obtain a desired processing or performance property for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.williamandrew.com), can select from many different types of additives for inclusion into the compounds of the present invention.

Non-limiting examples of optional additives include adhesion promoters; antioxidants; biocides (antibacterials, fungicides, and mildewcides), anti-fogging agents; anti-static agents; bonding, blowing and foaming agents; dispersants; fillers and extenders; smoke suppresants; expandable char formers; impact modifiers; initiators; lubricants; micas; pigments, colorants and dyes; oils and plasticizers; processing aids; other polymers; release agents; silanes, titanates and zirconates; slip and anti-blocking agents; stabilizers; stearates; tackifiers; ultraviolet light absorbers; viscosity regulators; waxes; and combinations of them.

Table 1a, for SBC which requires plasticizing oil, shows the acceptable, desirable, and preferable ranges of ingredients for the thermoplastic elastomer compound of the present invention, (so long as the particular combination results in a TPE which has an elongation of more than 200%). Table 1b, for SBC which does not require plasticizing oil, shows those same three ranges for the thermoplastic elastomer compound.

| **Table 1a** | | | |
|---|---|---|---|
| **Ranges of Ingredients** | | | |
| Ingredient (Wt. Percent) | Acceptable | Desirable | Preferable |
| Polyphenylene Ether (blended or unblended) - | 10-50 | 15-40 | 20-35 |
| Hydrogenated Styrenic Block Copolymer (requiring oil) | 10-50 | 15-45 | 20-40 |
| Solid, Non-Halogenated Flame Retardant | 5-30 | 5-25 | 10-20 |
| Nucleated Olefinic Polymer | 5-30 | 5-25 | 5-20 |
| Oil | 5-30 | 5-25 | 5-20 |
| Tackifier | 5-25 | 5-20 | 5-15 |
| Other Additives | 0-5 | 0.5-2 | 0.7-1.5 |

| **Table 1b** | | | |
|---|---|---|---|
| **Ranges of Ingredients** | | | |
| Ingredient (Wt. Percent) | Acceptable | Desirable | Preferable |
| Polyphenylene Ether (blended or unblended) | 10-60 | 15-50 | 20-50 |
| Hydrogenated Styrenic Block Copolymer (not requiring oil) | 20-60 | 25-55 | 30-50 |
| Solid, Non-Halogenated Flame Retardant | 5-30 | 5-25 | 10-20 |
| Nucleated Olefinic Polymer | 5-40 | 5-35 | 10-30 |
| Optional Oil | 0-10 | 0-7 | 0-5 |
| Tackifier | 0-20 | 0-10 | 0-5 |
| Other Additives | 0-5 | 0.5-2 | 0.7-1.5 |

### Processing

The preparation of compounds of the present invention is uncomplicated once the proper ingredients have been selected. The compound of the present can be made in batch or continuous operations.

Mixing in a continuous process typically occurs in an extruder that is elevated to a temperature that is sufficient to melt the polymer matrix with addition of all additives at the feed-throat, or by injection or side-feeders downstream. Extruder speeds can range from about 300 to about 700 revolutions per minute (rpm), and preferably from about 500 rpm. Typically, the output from the extruder is pelletized for later extrusion or molding into polymeric articles.

Subsequent extrusion or molding techniques are well known to those skilled in the art of thermoplastics polymer engineering. Without undue experimentation but with such references as "Extrusion, The Definitive Processing Guide and Handbook"; "Handbook of Molded Part Shrinkage and Warpage"; "Specialized Molding Techniques"; "Rotational Molding Technology"; and "Handbook of Mold, Tool and Die Repair Welding", all published by Plastics Design Library (www.williamandrew.com), one can make articles of any conceivable shape and appearance using compounds of the present invention.

### USEFULNESS OF THE INVENTION

Any plastic article needing flexibility, elongation, flame retardance, and the physical properties of PPE can benefit from TPEs of the present invention. Preferably, any plastic article which employs flexible polyvinyl chloride compounds can now be served by TPEs of the present invention.

As seen in the examples below, the TPEs can be especially useful as insulation or jacketing layers or both used with protected electrical line (wire or cable or both) which requires flame retardant properties and sufficient physical properties to pass the UL 62 safety standard. Electrical power wires and cables fit this category.

Alternatively, because it has been found that TPE compounds of the present invention also pass the VW-1 and V-0 flame tests, they are also suitable as insulation or jacketing layers for accessory wire or accessory cable that need not meet all parts of the UL 62 safety standard.

Moreover, other plastic articles which need strong physical properties arising from PPE and non-halogenated flame retardance can benefit from TPE compounds of this invention. Such plastic articles are typically injection molded into precise electrical or electronic parts, such as connectors, junction boxes, etc.

### EXAMPLES

Table 2 shows sources of ingredients for the examples.

| **Table 2** | | |
|---|---|---|
| **Chemical** | **Brand** | **Source** |
| Styrene-ethylene-butylene-styrene hydrogenated thermoplastic elastomer | Kraton G1650 | Kraton Polymers |
| Styrene-ethylene-butylene-styrene hydrogenated thermoplastic elastomer | Kraton G1652 | Kraton Polymers |
| Styrene-ethylene-butylene-styrene hydrogenated thermoplastic elastomer | Kraton G1642 | Kraton Polymers |
| Styrene ethylene-ethylenepropylene styrene hydrogenated thermoplastic elastomer | Septon 4033 | Kuraray |
| Proprietary high temperature performance hydrogenated block copolymer | Kuraray Q1250 | Kuraray |
| Styrene-ethylene-butylene-styrene hydrogenated thermoplastic elastomer | Kraton G1654H | Kraton Polymers |
| Styrene-ethylene-butylene-styrene hydrogenated thermoplastic elastomer with high vinyl content. | Kraton G1643 | Kraton Polymers |
| Styrene-ethylene-butylene-styrene hydrogenated thermoplastic elastomer with high vinyl content. | Kraton MD6945 | Kraton Polymers |
| White mineral oil | Drakeol 600 | Drake Oil Co. |
| Polyphenylene Ether resin | Blendex HPP820 | Chemtura |
| Nucleated polypropylene process aid | Formolene 5144L | Formosa Plastics |
| Tackifier (SEBS Midblock Modifier) | Plastolyn R1140 | Eastman Chemicals |
| Pigment | Black CPH-294 | Polymer Partner, Henderson, KY |
| Organophosphinate flame retardant | Exolit OP 935 | Clariant |
| Melamine-polyphosphate flame retardant | JLS-PNA | Hangzhou JLS Flame Retardants Chemicals Co. (China) |
| Polyammonium polyphosphate | JLS-APP | Hangzhou JLS Flame Retardants Chemicals Co. (China) |
| Proprietary nitrogen-phosphorous based flame retardant | FP-2100J | Amfine (Upper Saddle River, NJ, USA) |
| Antioxidant | Irganox 1010 | Ciba |
| Antioxidant | Irgafos 168 | Ciba |
| Antioxidant | Naugard 445 | Chemtura |
| Antioxidant | Irganox MD 1024 | Ciba |
| Fluoropolymer Process Aid | Dynamar FT 5911 | Dyneon (3M Company) |

All Examples and Comparison Examples were made via a two-pass extrusion process because the solid flame retardant is overly sensitive at or above the glass transition temperature (T_{g}) of PPE. (In commercial production using a high length/diameter ratio extruder, a single pass process is feasible with downstream addition of the solid flame retardant(s) in a zone of lower temperature.)

In the first pass, all ingredients except the flame retardant(s) were fed into the throat of a Leistritz twin screw extruder, having a downstream volatiles evacuation port operating under minor negative pressure, to make pellets. The extruder operated at a mixing speed of 500 rpm and a barrel temperature of about 248°C with a 1 mm die and pelletizer to form pellets. During extrusion, a minor amount of water was introduced into a side port upstream from the volatiles extrusion port to assist processing. The pellets are returned to throat of the extruder and the solid flame retardant(s) are added at the throat to commence the second pass of compounding. The extruder operated at a mixing speed of 500 rpm and a barrel temperature of about 199°C with a 1 mm die and pelletizer to form pellets.

Depending on the test needed, the pellets were molded into plaques, extruded into film, or extruded into wire and cable insulation or jacketing layers.

To make test film, a Brabender extruder having and a 15.24 cm extrusion die and operating at mixing speed of 100 rpm and 215°C barrel temperature was then used to make film of 0.38-0.51 mm nominal thickness for physical property testing except for Shore A hardness. To test for hardness, pellets were injection molded into a 3.0 mm test plaque.

Table 3 shows the formulations of Examples 1-5, internal tests made into film for initial screening for UL-62 testing and other physical testing.

| **Table 3** | | | | | |
|---|---|---|---|---|---|
| **Ingredient (Wt. %)** | **1** | **2** | **3** | **4** | **5** |
| Kraton G1650 (100,000 Mw) | 25.26 | 24.58 | 23.4 | 23.94 | 21.62 |
| Drakeol 600 | 11.48 | 11.17 | 13.29 | 13.6 | 12.28 |
| Blendex 820 | 26.41 | 25.7 | 27.65 | 28.29 | 25.55 |
| Formolene 5144L | 11.48 | 11.17 | 10.1 | 10.34 | 9.334 |
| Plastolyn R1140 | 11.48 | 11.17 | 10.63 | 10.88 | 9.826 |
| Black CPH-294 | 0 | 0 | 1.063 | 1.088 | 0.983 |
| Clariant OP 935 | 8.726 | 10.28 | 8.72 | 7.398 | 0 |
| JLS-PNA | 4.363 | 5.139 | 4.36 | 3.699 | 0 |
| JLS-APP | 0 | 0 | 0 | 0 | 13.76 |
| FP-2100J | 0 | 0 | 0 | 0 | 5.895 |
| Irganox 1010 | 0.149 | 0.145 | 0.138 | 0.141 | 0.138 |
| Irgafos 168 | 0.149 | 0.145 | 0.138 | 0.141 | 0.138 |
| Naugard 445 | 0.195 | 0.201 | 0.202 | 0.196 | 0.197 |
| Irganox MD 1024 | 0.253 | 0.246 | 0.255 | 0.25 | 0.246 |
| Dynamar FT 5911 | 0.052 | 0.05 | 0.048 | 0.049 | 0.044 |

Table 4 shows the mechanical test results of compounds made from Examples 1-5 in the form of extruded film of 0.38-0.51 mm nominal thickness, except for Shore A hardness which was tested using a injected molded 3.0 mm thick plaque. The film provided a good preliminary test for physical properties of the compounds as insulation or jacketing layers.

| **Table 4** | | | | | |
|---|---|---|---|---|---|
| **Test** | **1** | **2** | **3** | **4** | **5** |
| Shore A Hardness (ASTM D2240) | 85 | 85 | 85 | 83 | 86 |
| Specific Gravity (g/cm³) | 1.008 | 1.016 | 0.999 | 0.991 | 1.065 |
| Tensile Strength (psi) (ASTM D882) | 2900 | 2700 | 2900 | 3000 | 2600 |
| Elongation (%) (ASTM D882) | 250 | 240 | 250 | 240 | 250 |
| 121°C/7 Day Aging | | | | | |
| % Tensile Strength Retention (UL 62) | 107 | 104 | 107 | 107 | 103 |
| % Elongation Retention (UL 62) | 92 | 96 | 92 | 96 | 88 |
| 136°C/7 Day Aging | | | | | |
| % Tensile Strength Retention (UL 62) | 107 | 104 | 107 | -- | -- |
| % Elongation Retention (UL 62) | 92 | 96 | 92 | -- | -- |

Tables 5-12 show the compliance of Examples 6-11 (Examples 1-3 made into cable insulation or jacketing) passing the safety standards of UL 62 using the test methods found in UL 1581.

Examples 6 and 7 were Examples 1 and 2 pellets, respectively, extruded into an insulation layer on a standard cable extruder operating at a speed of 200 meters per minute and with barrel temperature set at 200°C to make an insulation wire as specified by the UL 62 test for 18AWG cable. Insulation is regarded as the more difficult test to pass, as compared with jacketing. Therefore, only insulation was performed.

Example 8 was the combination of Example 2 pellets extruded into an insulation layer and Example 3 pellets extruded as a jacketing layer, both on a standard cable extruder operating at a speed of 200 meters per minute and with barrel temperature set at 200°C to make an insulation wire as specified by the UL 62 test for SVE 90C 18AWG/3C cable.

In the Tables, "I' means Insulation, and "J" means Jacketing.

| **Table 5** | | | | | | | | | | |
|---|---|---|---|---|---|---|---|---|---|---|
| **UL 62 and UL 1581 Tests** | | | | | | | | | | |
| **Safety Standard** | | | | | | | | | | |
| Temperature | Before Aging (Minimum) | | | Air Oven After Aging | | | | | | |
| | Elongation (%) | Tensile Strength (MPa) | | Oven Temp. | | Duration | % Retention of Before Aging Value (Minimum) | | | |
| | | | | | | | Elongation | | Tensile Strength | |
| 105°C | 200% | 5.52 for I and 8.31 for J | | 136°C | | 168 | 75% | | 75% | |
| | | | | | | | | | | |

| Test Data | | | | | | | | | | |
|---|---|---|---|---|---|---|---|---|---|---|
| Before Aging | | | | | | | | | | |
| Example | Specific Gravity (g/m³) | Section Area (mm²) | Elongation (%) (Average of for 6 and 7; Average of 5 for 8) | | Force at Break (kg) (Average of 4) | | | Tensile Strength (MPa) | | Pass/Fail |
| 6I | 1.008 | 5.200 | 271 | | 8.667 | | | 16.38 | | Pass |
| 7I | 1.008 | 5.200 | 271 | | 8.693 | | | 16.38 | | Pass |
| 8I | -- | -- | 264 | | -- | | | 18.27 | | Pass |
| 8J | -- | -- | 246 | | -- | | | 15.62 | | Pass |

| **Table 6** | | | | | | | | |
|---|---|---|---|---|---|---|---|---|
| **UL 62 and UL 1581 Tests** | | | | | | | | |
| **After Aging** | | | | | | | | |
| **(Examples 6 and 7 used 136°C and 168 hours; Example 8 used 121°C and 168 hours)** | | | | | | | | |
| Example | Specific Gravity (g/cm³) | Section Area (mm²) | Elongation (%) (Average of 5) | Force at Break (kg) (Average of 5) | Tensile Strength (MPa) | % Retention of Before Aging Value | | Pass/Fail |
| | | | | | | Elongation | Tensile Strength | |
| 6I | 1.008 | 5.200 | 227 | 8.614 | 15.98 | 84% | 99% | Pass |
| 7I | 1.008 | 5.200 | 216 | 8.293 | 15.59 | 80% | 95% | Pass |
| 8I | -- | -- | 227 | -- | 19.59 | 86% | 107% | Pass |
| 8J | -- | -- | 188 | -- | 14.98 | 76% | 96% | Pass |

| **Table 7** | | | | | | |
|---|---|---|---|---|---|---|
| **UL 62 and UL 1581 Tests** | | | | | | |
| **VW-1 Flame Test (secs.)** | | | | | | |
| | **1** | **2** | **3** | **4** | **5** | **Pass/Fail** |
| 6Ia | 42.3 | 9.1 | 0.5 | 0.3 | 0.4 | Pass |
| 6Ib | 38.4 | 12.1 | 0.9 | 0.2 | 0.3 | Pass |
| 6Ic | 41.3 | 2.8 | 0.6 | 0.5 | 0.3 | Pass |
| 7Ia | 35.1 | 3.4 | 0.9 | 0.5 | 0.4 | Pass |
| 7Ib | 30.6 | 8 | 0.3 | 0.4 | 0.5 | Pass |
| 7Ic | 40.6 | 4.9 | 0.5 | 0.7 | 0.6 | Pass |
| 8Ia | 16 | 3 | 0 | 0 | 0 | Pass |
| 8Ib | 15 | 1 | 0 | 0 | 0 | Pass |
| 8Ic | 15 | 2 | 0 | 0 | 0 | Pass |
| 8Id | 17 | 4 | 0 | 0 | 0 | Pass |
| 8Ie | 16 | 3 | 0 | 0 | 0 | Pass |
| 8Ja | 1 | 2 | 4 | 14 | 6 | Pass |
| 8Jb | 1 | 10 | 2 | 7 | 17 | Pass |
| 8Jc | 0 | 15 | 7 | 17 | 14 | Pass |
| 8Jd | 0 | 14 | 9 | 19 | 6 | Pass |
| 8Je | 0 | 12 | 8 | 12 | 5 | Pass |

| **Table 8** | | |
|---|---|---|
| **UL 62 and UL 1581 Tests** | | |
| **Cold Bend Test** | | |
| Safety Standard: No Cracks After Treatment at a Temperature of -40°C ±2°C for 6 Hours Using a Mandrel of a Diameter of 12mm and having 6 Spiral Turns | Results | Pass/Fail |
| 6Ia | No Cracks | Pass |
| 6Ib | No Cracks | Pass |
| 6Ic | No Cracks | Pass |
| 7Ia | No Cracks | Pass |
| 7Ib | No Cracks | Pass |
| 7Ic | No Cracks | Pass |
| Safety Standard: No Cracks After Treatment at a Temperature of -20°C ±2°C for 4 Hours Using a Mandrel of a Diameter of 6.5 mm for I and of 19 mm for J | Results | Pass/Fail |
| 8Ia | No Cracks | Pass |
| 8Ib | No Cracks | Pass |
| 8Ic | No Cracks | Pass |
| 9Ja | No Cracks | Pass |
| 8Jb | No Cracks | Pass |
| 8Jc | No Cracks | Pass |

| **Table 9** | | |
|---|---|---|
| **UL 62 and UL 1581 Tests** | | |
| **Hot Water Insulation Resistance Test** | | |
| **(70°C for 48 Hours and 1000 Volts)** | | |
| Safety Standard: >0.011 MΩ/km | Results | Pass/Fail |
| 6a | Over Limit | Pass |
| 6b | Over Limit | Pass |
| 6c | -- | -- |
| 7a | Over Limit | Pass |
| 7b | Over Limit | Pass |
| 7c | Over Limit | Pass |

| **Water Insulation Resistance Test** | | |
|---|---|---|
| **(25 °C for 0.5 Hours)** | | |
| Safety Standard: >0.76 GΩ/m | Results | Pass/Fail |
| 8Ia | 1737 GΩ/m | Pass |
| 8Ib | 2073 GΩ/m | Pass |
| 8Ic | 2164 GΩ/m | Pass |

| **Table 10** | | |
|---|---|---|
| **UL 62 and UL 1581 Tests** | | |
| **Deformation Test (150°C for 1 Hour)** | | |
| Safety Standard: 300g (18AWG Wire) and a Deformation of <50% | Thermal Deformation (%) | Pass/Fail |
| 6a | 42.5 | Pass |

| Safety Standard: 300g (18AWG Wire) and a Deformation of <50% | Thermal Deformation (%) | Pass/Fail |
|---|---|---|
| 7a | 38.4 | Pass |
| 8Ia | 35.2* | Pass |
| 8Ib | 35.6* | Pass |
| 8Ic | 37.1* | Pass |
| 8Ja | 17.9 | Pass |
| 8Jb | 19.2 | Pass |
| 8Jc | 21.3 | Pass |

| | | |
|---|---|---|
| * Using the copper rod test method after the first test using the twist wire test method resulted in 53.3%, 52.9%, and 52.7% Thermal Deformation Rates, respectively. | | |

| **Table 11** | | | | | | |
|---|---|---|---|---|---|---|
| **Immersed Water Test* (70 °C for 168 Hours)** | | | | | | |
| Example | Elongation (%) | Force at Break (kg) | Tensile Strength (kg/mm²) | % Retention of Before Aging Value | | Pass or Fail |
| | Average of 5 | | | | | |
| | | | | Elongation | Tensile Strength | |
| 6 | 255 | 8.903 | 1.71 | 94% | 103% | Pass |

| | | | | | | |
|---|---|---|---|---|---|---|
| *Immersed water test is required by the European Union. | | | | | | |

| **Table 12** | | |
|---|---|---|
| **UL 62 and UL 1581 Tests** | | |
| **Hot Shock Test** | | |
| Safety Standard: No Cracks After Treatment at a Temperature of 150°C for 1 Hour | Results | Pass/Fail |
| 6Ia | No Cracks | Pass |
| 6Ib | No Cracks | Pass |
| 6Ic | No Cracks | Pass |
| 7Ia | No Cracks | Pass |
| 7Ib | No Cracks | Pass |
| 7Ic | No Cracks | Pass |
| 8Ia | No Cracks | Pass |
| 8Ib | No Cracks | Pass |
| 8Ic | No Cracks | Pass |
| 8Ja | No Cracks | Pass |
| 8Jb | No Cracks | Pass |
| 8Jc | No Cracks | Pass |

Three samples each of Examples 6, 7, and 8 also passed the DiElectric Strength test of UL 62 and UL 1581 after testing in air at 1.5 kV for one minute.

From a review of Tables 5-12 and the preceding paragraph, it is seen that Examples 1 and 2, designed for insulation, and Example 3, designed for jacketing, and formed into those layers as Examples 6-8 pass the difficult UL 62 tests using the methods of testing outlined in UL 1581. This is believed to be the first time a PPE-rich TPE has passed the UL 62 safety standard, a breakthrough of a long-felt need in the wire and cable industry.

### Examples 9-33

Tables 13-19 show the formulations and physical property test results for Examples 9-33. All Examples 9- 33 were made in the same manner as Examples 1-3 and molded in the same manner as Examples 1-3 tested as plaques for Shore A hardness and as films for the other physical properties.

Examples 9-30 were tested to determine the variations possible for the TPE without the presence of non-halogenated flame retardant. The goal of Examples 9-30 was to maximize physical properties of the TPE, especially elongation retention percentage after aging, because the addition of flame retardant(s) to the compound would likely reduce that percentage retention. Tables 13-18 therefore show testing of parameters of the base TPE compound without flame retardant present and are designed to assist the person having ordinary skill in the art to guide the construction many different formulations of TPEs of the present invention without undue experimentation.

Examples 31-33 were formulations with non-halogenated flame retardant which benefitted from the studies of Examples 9-30 with results as seen in Tables 13-18. Table 19 shows the testing of Examples 30-33 for the all-important UL V-0 flame test useful in many different end uses for thermoplastic elastomers.

Table 13 shows the effects of a variety of oil loadings on thermal aging elongation retention for the TPE without flame retardant present. If solid flame retardant were to be added to these formulations, it is possible that only Example 12 would pass the after-aging elongation retention test of UL-62 for protected electrical lines. However, the formulations could be useful for other TPE-based plastic articles needing the strength of PPE and the flame retardance of solid flame retardants.

| **Table 13** | | | | |
|---|---|---|---|---|
| **Effect of Oil without Tackifier or Flame Retardant** | | | | |
| Ingredients (Wt. %) | **9** | **10** | **11** | **12** |
| Kraton G1650 | 24.92% | 28.10% | 30.43% | 32.21% |
| Drakeol 600 | 22.65% | 19.16% | 27.66% | 14.64% |
| Blendex HPP820 | 29.45% | 33.21% | 27.66% | 38.07% |
| Formolene 5144L | 22.65% | 19.16% | 13.83% | 14.64% |
| Irganox 1010 | 0.34% | 0.38% | 0.41% | 0.44% |
| | | | | |
| Hardness, A | 86 | 87 | 74 | 88 |
| Tensile, psi | 2500 | 3100 | 2700 | 3400 |
| Elongation, % | 270 | 270 | 290 | 230 |

| 136°C/168h Aging | | | | |
|---|---|---|---|---|
| T/S retention, % | 104% | 100% | 89% | 111% |
| Elongation retention, % | 78% | 81% | 76% | 87% |

Table 14 shows the effects of variation of polypropylene on TPE hardness and thermal aging elongation retention without flame retardant present. Example 13 is preferred over Example 14 for most end uses because the former is softer and better after-aging elongation retention. However, some skilled in the art might prefer Example 14 for use as injection molded TPE-based plastic articles.

| **Table 14** | | |
|---|---|---|
| **Effect of Polypropylene without Flame Retardant** | | |
| Ingredients (Wt. %) | **13** | **14** |
| Kraton G1650 | 29.22% | 27.74% |
| Drakeol 600 | 13.28% | 12.61% |
| Blendex HPP820 | 30.54% | 29.00% |
| Formolene 5144L | 13.28% | 17.65% |
| Plastolyn R1140 | 13.28% | 12.61% |
| Irganox 1010 | 0.40% | 0.38% |
| | | |
| Hardness, A | 83 | 89 |
| Tensile, psi | 3800 | 3700 |
| Elongation, % | 280 | 310 |
| | | |
| 136°C/168h aging | | |
| T/S retention, % | 95% | 95% |
| Elongation retention, % | 96% | 81% |

Table 15 shows the effects of various concentrations of tackifier without flame retardant present, emphasizing that more than 7.5 weight percent of tackifier assists the modification of mid-block olefin moieties of the hydrogenated styrene block copolymer for those formulations which use an hydrogenated SBC requiring plasticizing oil. No film could be made with Example 15, and only bad film could be made with Example 16. These results predict that no practical extrusion as insulation or jacketing would be possible, although injection molding might be possible. Therefore, Examples 15 and 16 are unsatisfactory for protected electrical lines without tackifier present.
Example 17 is the same formulation as Example 13, and both Examples 13 and 17 employ the same base compound as that used in Examples 1 and 2 above.

| **Table 15** | | | |
|---|---|---|---|
| **Effect of Tackifier without Flame Retardant** | | | |
| Ingredients (Wt. %) | **15** | **16** | **17** |
| Kraton G1650 | 33.69% | 31.29% | 29.22% |
| Drakeol 600 | 15.31% | 14.22% | 13.28% |
| Blendex HPP820 | 35.22% | 32.72% | 30.54% |
| Formolene 5144L | 15.31% | 14.22% | 13.28% |
| Plastolyn R1140 | 0.00% | 7.11% | 13.28% |
| Irganox 1010 | 0.46% | 0.43% | 0.40% |
| | | | |
| Hardness, A | No Film | Bad Film | 83 |
| Tensile, psi | No Film | Bad Film | 3800 |
| Elongation, % | No Film | Bad Film | 280 |
| | | | |
| 136°C/168h aging | | | |
| T/S retention, % | No Film | Bad Film | 95% |
| Elongation retention, % | No Film | Bad Film | 96% |

Table 16 shows the effects of the amount of PPE used without flame retardant present, emphasizing that less than about 38 weight percent is preferred for those formulations. Also after addition of solid flame retardant, the TPE compound of Example 18 would be expected to extrude only at a slower rate than the rates (> 200 m/min.) for either Example 19 or Example 20. Example 20 was the same base TPE compound without flame retardant as Example 3 above. There might be some injection molded plastic articles which actually prefer a rough surface.

| **Table 16** | | | |
|---|---|---|---|
| **Effect of PPE Amount without Flame Retardant** | | | |
| Ingredients (Wt. %) | **18** | **19** | **20** |
| Kraton G1650 | 25.49% | 27.06% | 28.10% |
| Drakeol 600 | 11.59% | 12.30% | 12.77% |
| Blendex HPP820 | 39.40% | 35.67% | 33.21% |
| Formolene 5144L | 11.59% | 12.30% | 12.77% |

| Ingredients (Wt. %) | **18** | **19** | **20** |
|---|---|---|---|
| Plastolyn R1140 | 11.59% | 12.30% | 12.77% |
| Irganox 1010 | 0.35% | 0.37% | 0.38% |
| Surface Texture | Rough | Smooth | Smooth |

Table 17 shows the use of a variety of hydrogenated thermoplastic elastomers, without flame retardant present. The inability to make film was not fatal to the possibility of using Kraton G1654H in the TPE compound of the invention. Example 21 was the base compound, without flame retardant, of Example 3 above which has proven to pass UL 62 as a jacketing layer in Example 8 and will likely process very rapidly and well. It is expected that Example 26 using SEEPS will work as well as Example 21 using SEBS. However, Example 27 showed difficult film formation, probably due to the higher molecular weight of Kraton G1654 SEBS than the molecular weight of Kraton G1650 SEBS. Moreover, Examples 22 - 25, while passing after-aging percentage elongation retention barely, would not be expected to pass that test after the introduction of solid flame retardant. Nonetheless, Examples 22-25 might have usefulness for injection molded plastic articles where after-aging percentage elongation retention of >75% is not required.

| **Table 17** | | | | | | | |
|---|---|---|---|---|---|---|---|
| **Effect of TPE Used without Flame Retardant** | | | | | | | |
| Ingedients (Wt. %) | **21** | **22** | **23** | **24** | **25** | **26** | **27** |
| Kraton G1650 | 28.10% | 0.00% | 0.00% | 12.77% | 6.39% | 0.00% | 0.00% |
| Kraton G1652 | 0.00% | 28.10% | 0,00% | 0.00% | 0.00% | 0.00% | 0.00% |
| Kraton 1642 | 0.00% | 0.00% | 28.10% | 0.00% | 0.00% | 0.00% | 0.00% |
| Septon 4033 | 0.00% | 0.00% | 0.00% | 0.00% | 0.00% | 28.10% | 0.00% |
| Kuraray Q1250 | 0.00% | 0.00% | 0,00% | 15.33% | 21.71% | 0,00% | 0,00% |
| Kraton G1654H | 0.00% | 0.00% | 0,00% | 0.00% | 0.00% | 0.00% | 28.10% |
| Drakeol 600 | 12.77% | 12,77% | 12.77% | 12.77% | 12.77% | 12.77% | 12.77% |
| Blendex HPP820 | 33.21% | 33.21% | 33.21% | 33.21% | 33.21% | 33.21% | 33.21% |
| Formolene 5144L | 12,77% | 12.77% | 12,77% | 12.77% | 12.77% | 12.77% | 12.77% |
| Plastolyn R1140 | 12.77% | 12.77% | 12,77% | 12.77% | 12.77% | 12.77% | 12.77% |
| Irganox 1010 | 0.38% | 0.38% | 0.38% | 0.38% | 0.38% | 0.38% | 0.38% |
| | | | | | | | No Film |
| Tensile, psi | 3400 | 2700 | 2400 | 2700 | 1900 | 3300 | |
| Elongation, % | 270 | 240 | 330 | 270 | 230 | 270 | |
| | | | | | | | |
| 136°C/168h aging | | | | | | | |
| TIS retention, % | 94% | 100% | 75% | 89% | 84% | 92% | |
| Elongation retention, % | 89% | 75% | 79% | 78% | 70% | 88% | |

Table 18 shows the effects of varying the type of thermoplastic elastomer including those grades which are intended to be used without the presence of oil. Example 28 offers the comparison of an oil and mid-block modifier formulation against Examples 29 and 30 which do not. The amount of oil is replaced by thermoplastic elastomer. The amount of mid-block modifier is replaced by polypropylene.

| **Table 18** | | | |
|---|---|---|---|
| **Effect of TPE Used without Flame Retardant** | | | |
| Ingredients (Wt. %) | **28** | **29** | **30** |
| Kraton G1650 | 29.22% | 0.00% | 0.00% |
| Kraton MD6945 | 0.00% | 42.50% | 0.00% |
| Kraton G1643 | 0.00% | 0.00% | 42.50% |
| Drakeol 600 | 13.28% | 0.00% | 0.00% |
| Blendex HPP820 | 30.54% | 30.54% | 30.54% |
| Formolene 5144L | 13.28% | 26.56% | 26.56% |
| Plastolyn R1140 | 13.28% | 0.00% | 0.00% |
| Irganox 1010 | 0.40% | 0.40% | 0.40% |
| | | | |
| Hardness, A | 83 | 91 | 89 |
| Tensile, psi | 3800 | 2400 | 1900 |
| Elongation, % | 280 | 430 | 360 |
| Viscosity @ 200°C. Pa-s | | | |
| 223/s | 386 | 794 | 708 |
| 67/s | 954 | 1984 | 1524 |
| 136°C/168h aging | | | |
| T/S retention, % | 95% | 100% | 100% |
| Elongation retention, % | 96% | 86% | 81% |

Table 19 shows formulations of the invention also passed the UL V-0 flame retardancy test. Examples 31-33 all included organo-phosphinate as a synergist for either melamine polyphosphate, polyammonium polyphosphate, or the proprietary Amfine FP-2100J nitrogen-phosphorous based flame retardant product.

| **Table 19** | | | |
|---|---|---|---|
| **Test for V-0 Performance with Flame Retardant** | | | |
| Ingredients (Wt. %) | **31** | **32** | **33** |
| Kraton G1650 | 23.84% | 23.84% | 23.84% |
| Drakeol 600 | 10.83% | 10.83% | 10.83% |
| Blendex HPP820 | 28.17% | 28.17% | 28.17% |
| Formolene 5144L | 10.83% | 10.83% | 10.83% |
| Plastolyn R1140 | 10.83% | 10.83% | 10.83% |
| Exolit OP 935 | 7.58% | 7.58% | 7.58% |
| JLS PNA | 7.58% | 0.00% | 0.00% |
| JLS-APP | 0.00% | 7.58% | 0.00% |
| FP-2100J | 0.00% | 0.00% | 7.58% |
| Irganox 1010 | 0.33% | 0.33% | 0.33% |
| UL-94 V0 @ 3.00 mm thickness | Pass | Pass | Pass |

Without undue experimentation, a person having ordinary skill in the art can utilize Examples 1-33 to make insulation or jacketing for protected electrical line (wire, cable, or both) which can pass the UL 62 test. Also, these Examples inform the art of these compounds being suitable for injected molded TPE-based plastic articles which need flame retardance.

## Claims

1. A thermoplastic elastomer compound, comprising:
(a) from about 10 to about 60 weight percent of a polyphenylene ether;
(b) from about 10 to about 60 weight percent of a hydrogenated styrenic block copolymer;
(c) from about 5 to about 30 weight percent of at least one solid non-halogen flame retardant selected from the group consisting of organophosphinate, melamine polyphosphate, and combinations thereof; and
(d) from about 5 to about 40 weight percent of a nucleated olefinic polymer;
(e) from about 5 to about 30 weight percent of an oil to plasticize the hydrogenated styrenic block copolymer; and
(f) from about 5 to about 25 weight percent of a tackifier to modify an olefinic mid-block of the hydrogenated styrenic block copolymer;
wherein the compound has a before-aging tensile elongation of >200% and an after-aging tensile elongation residual of at least 75%, according to Underwriters' Laboratory test UL 62.

2. The compound of Claim 1,
wherein the hydrogenated styrenic block copolymer has a weight average molecular weight of between about 70,000 and about 160,000 and a ratio of styrenic end-block to olefinic mid-block should range from about 20/80 to about 40/60.

3. The compound of Claim 1 or Claim 2, wherein the hydrogenated styrenic block copolymer is selected from the group consisting of styrene-ethylene butylene-styrene polymers, styrene-ethylene propylene-styrene polymers, hydrogenated styrene-isoprene block copolymers, and hydrogenated styrene-butadiene block copolymers, styrene-ethylene-ethylene-propylene-styrene copolymers, and combinations of them.

4. The compound of any of Claims 1-3, wherein the polyphenylene ether is unblended or blended with an aromatic vinyl group thermoplastic resin.

5. The compound of Claim 4, wherein the polyphenylene ether is selected from the group consisting of poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-1,4-phenylene ether), poly(2,6-dimethoxy -1,4-phenylene ether), poly(2,6-di(chloro methyl)-1,4-phenylene ether), poly(2,6-di(bromo methyl)-1,4-phenylene ether), poly(2,6-diphenyl-1,4-phenylene ether), poly(2,6-ditoluyl -1,4-phenylene ether), poly(2,6-dichloro-1,4-phenylene ether), poly(2,6-dibenzyl-1,4-phenylene ether), poly(2,5-dimethyl-1,4-phenylene ether), and combinations thereof.

6. The compound of Claim 5, wherein the aromatic vinyl group thermoplastic resin is selected from the group consisting of homopolymers of styrene or its derivatives, copolymers of styrene and p-methyl styrene, copolymers of styrene and alpha-methyl styrene, copolymers of styrene and alpha-methyl-p-methyl styrene, copolymers of styrene and chlorostyrene, copolymers of styrene and bromostyrene, and combinations thereof.

7. The compound of any of Claims 1-6, wherein the solid flame retardant is an organo-phosphinate and wherein the compound further comprises polyammonium polyphosphate as a solid flame retardant.

8. The compound of any of Claims 1-7, wherein the nucleated olefinic polymer is nucleated polypropylene homopolymer.

9. The compound of any of Claims 1-8, wherein the compound further comprises adhesion promoters; antioxidants; biocides, antibacterials, fungicides, and mildewcides; anti-fogging agents; anti-static agents; bonding, blowing or foaming agents; dispersants; fillers or extenders; smoke suppresants; expandable char formers; impact modifiers; initiators; lubricants; micas; pigments, colorants or dyes; processing aids; release agents; silanes, titanates or zirconates; slip or anti-blocking agents; stabilizers; stearates; tackifiers; ultraviolet light absorbers; viscosity regulators; waxes; and combinations of them.

10. The compound of any of Claims 1-9 in the form of an insulation layer enveloping a protected electrical line or in the form of a jacketing layer enveloping a protected electrical line.

11. A plastic article made from a compound of any of Claims 1-9.

12. The plastic article of Claim 11, in the form of an electrical part or an electronic part.

13. A protected electrical line, comprising:
(a) wire or cable having an axial length and
(b) at least one layer of the compound of any of Claims 1-9 enveloping the axial length of the wire or cable.

14. The protected electrical line of Claim 13 in the form of a wire.

15. The protected electrical line of Claim 13 in the form of a cable.

## Patentansprüche

1. Thermoplastisches Elastomer-Compound, umfassend:
(a) etwa 10 bis etwa 60 Gew.-% eines Polyphenylenethers;
(b) etwa 10 bis etwa 60 Gew.-% eines hydrierten Styrol-Blockcopolymers;
(c) etwa 5 bis etwa 30 Gew.-% wenigstens eines festen halogenfreien Flammschutzmittels, ausgewählt aus der Gruppe bestehend aus Organophosphinat, Melaminpolyphosphat und Kombinationen davon; und
(d) etwa 5 bis etwa 40 Gew.-% eines nukleierten Olefinpolymers;
(e) etwa 5 bis etwa 30 Gew.-% eines Öls zum Plastifizieren des hydrierten Styrol-Blockcopolymers; und
(f) etwa 5 bis etwa 25 Gew.-% eines Klebrigmachers zum Modifizieren eines Olefin-Mittelblocks des hydrierten Styrol-Blockcopolymers;
wobei das Compound eine Zugdehnung vor Alterung von >200% und eine Restzugdehnung nach Alterung von wenigstens 75% hat, nach Underwriters Laboratory Test UL 62.

2. Compound nach Anspruch 1, wobei das hydrierte Styrol-Blockcopolmer ein gewichtsmittleres Molekulargewicht zwischen etwa 70.000 und etwa 160.000 hat, und ein Verhältnis von Styrol-Endblock zu Olefin-Mittelblock im Bereich von etwa 20/80 bis etwa 40/60 liegen sollte.

3. Compound nach Anspruch 1 oder Anspruch 2, wobei das hydrierte Styrol-Blockcopolymer ausgewählt ist aus der Gruppe bestehend aus Styrol-Ethylene-Butylen-Styrol-Polymeren, Styrol-Ethylen-Propylen-Styrol-Polymeren, hydrierten Styrol-Isopren-Blockcopolymeren und hydrierten Styrol-Butadien-Blockcopolymeren, Styrol-Ethylen-Ethylen-Propylen-Styrol-Copolymeren und Kombinationen davon.

4. Compound nach einem der Ansprüche 1-3, wobei der Polyphenylenether unvermischt ist oder vermischt ist mit einem thermoplastischen Kunststoff mit aromatischen Vinylgruppen.

5. Compound nach Anspruch 4, wobei der Polyphenylenether ausgewählt ist aus der Gruppe bestehend aus Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether), Poly(2-ethyl-6-propyl-1,4-phenylenether), Poly(2,6-dimethoxy-1,4-phenylenether), Poly(2,6-di(chlormethyl)-1,4-phenylenether), Poly(2,6-di(brommethyl)-1,4-phenylenether), Poly(2,6-diphenyl-1,4-phenylenether), Poly(2,6-ditoluyl-1,4-phenylenether), Poly(2,6-dichlor-1,4-phenylenether), Poly(2,6-dibenzyl-1,4-phenylenether), Poly(2,5-dimethyl-1,4-phenylenether) und Kombinationen davon.

6. Compound nach Anspruch 5, wobei der thermoplastische Kunststoff mit aromatischen Vinylgruppen ausgewählt ist aus der Gruppe bestehend aus Homopolymeren von Styrol oder Derivaten davon, Copolymeren von Styrol und p-Methylstyrol, Copolymeren von Styrol und alpha-Methylstyrol, Copolymeren von Styrol und alpha-Methyl-p-methylstyrol, Copolymeren von Styrol und Chlorstyrol, Copolymeren of Styrol und Bromstyrol und Kombinationen davon.

7. Compound nach einem der Ansprüche 1-6, wobei das feste Flammschutzmittel ein Organophosphinat ist und wobei das Compound weiterhin Polyammoniumpolyphosphat als festes Flammschutzmittel umfasst.

8. Compound nach einem der Ansprüche 1-7, wobei das nukleierte Olefinpolymer nukleiertes Polypropylen-Homopolymer ist.

9. Compound nach einem der Ansprüche 1-8, wobei das Compound weiterhin Haftvermittler; Antioxidantien, Biozide, antibakterielle Mittel, Fungizide und Mittel gegen Schimmel; Antibeschlagmittel; Antistatika; Binde-, Treib- oder Schäummittel; Dispergiermittel; Füllstoffe oder Streckmittel; rauchunterdrückende Mittel; expandierbare Kohlebildner; Schlagzähmodifikatoren; Initiatoren; Schmiermittel; Glimmer; Pigmente, Farbmittel oder Farbstoffe; Verarbeitungshilfen; Trennmittel; Silane, Titanate oder Zirkonate; Gleit- oder Antiblockmittel; Stabilisatoren; Stearate; Klebrigmacher; UV-Absorber; Viskositätsregulatoren; Wachse; und Kombinationen davon umfasst.

10. Compound nach einem der Ansprüche 1-9 in Form einer Isolierschicht, die eine geschützte elektrische Leitung ummantelt, oder in Form einer Verkleidungsschicht, die eine geschützte elektrische Leitung ummantelt.

11. Kunststoffartikel aus einem Compound nach einem der Ansprüche 1-9.

12. Kunststoffartikel nach Anspruch 11 in Form eines Elektroteils oder eines Elektronikteils.

13. Geschützte elektrische Leitung, umfassend:
(a) Draht oder Kabel mit einer axialen Länge und
(b) wenigstens eine Schicht des Compounds nach einem der Ansprüche 1-9, die die axiale Länge des Drahts oder Kabels ummantelt.

14. Geschützte elektrische Leitung nach Anspruch 13 in Form eines Drahts.

15. Geschützte elektrische Leitung nach Anspruch 13 in Form eines Kabels.

## Revendications

1. Composé élastomère thermoplastique, comprenant :
(a) environ 10 à environ 60 pour cent en poids d'un polyphénylène éther ;
(b) environ 10 à environ 60 pour cent en poids d'un copolymère styrénique séquencé hydrogéné ;
(c) environ 5 à environ 30 pour cent en poids d'au moins un ignifuge non halogéné solide choisi dans le groupe constitué par un organo-phosphinate, un polyphosphate de mélamine et leurs combinaisons ; et
(d) environ 5 à environ 40 pour cent en poids d'un polymère oléfinique nucléé ;
(e) environ 5 à environ 30 pour cent en poids d'une huile pour plastifier le copolymère styrénique séquencé hydrogéné ; et
(f) environ 5 à environ 25 pour cent en poids d'un agent poisseux pour modifier une séquence oléfinique médiane du copolymère styrénique séquencé hydrogéné ;
dans lequel le composé présente un allongement à la traction avant vieillissement > 200 % et un allongement résiduel à la traction après vieillissement d'au moins 75 %, selon le test UL 62 de l'Underwriters' Laboratory.

2. Composé selon la revendication 1,
dans lequel le copolymère styrénique séquencé hydrogéné présente un poids moléculaire moyen en poids situé entre environ 70 000 et environ 160 000 et un rapport séquence styrénique terminale sur séquence oléfinique médiane d'environ 20/80 à environ 40/60.

3. Composé selon la revendication 1 ou la revendication 2, dans lequel le copolymère styrénique séquencé hydrogéné est choisi dans le groupe constitué par les polymères de styrène-éthylène butylène-styrène, les polymères de styrène-éthylène propylène-styrène, les copolymères séquencés hydrogénés de styrène-isoprène et les copolymères séquencés hydrogénés de styrène-butadiène, les copolymères de styrène-éthylène-éthylène-propylène-styrène et leurs combinaisons.

4. Composé selon l'une quelconque des revendications 1 à 3, dans lequel le polyphénylène éther n'est pas mélangé ou est mélangé avec une résine thermoplastique à groupe vinyle aromatique.

5. Composé selon la revendication 4, dans lequel le polyphénylène éther est choisi dans le groupe constitué par le poly(2,6-diméthyl-1,4-phénylène éther), le poly(2,6-diéthyl-1,4-phénylène éther), le poly(2-méthyl-6-éthyl-1,4-phénylène éther), le poly(2-méthyl-6-propyl-1,4-phénylène éther), le poly(2,6-dipropyl-1,4-phénylène éther), le poly(2-éthyl-6-propyl-1,4-phénylène éther), le poly(2,6-diméthoxy-1,4-phénylène éther), le poly(2,6-di(chlorométhyl)-1,4-phénylène éther), le poly(2,6-di(bromométhyl)-1,4-phénylène éther), le poly(2,6-diphényl-1,4-phénylène éther), le poly(2,6-ditoluyl-1,4-phénylène éther), le poly(2,6-dichloro-1,4-phénylène éther), le poly(2,6-dibenzyl-1,4-phénylène éther), le poly(2,5-diméthyl-1,4-phénylène éther) et leurs combinaisons.

6. Composé selon la revendication 5, dans lequel la résine thermoplastique à groupe vinyle aromatique est choisie dans le groupe constitué par les homopolymères de styrène ou leurs dérivées, les copolymères de styrène et de p-méthyl styrène, les copolymères de styrène et d'alpha-méthyl styrène, les copolymères de styrène et d'alpha-méthyl-p-méthyl styrène, les copolymères de styrène et de chlorostyrène, les copolymères de styrène et de bromostyrène et leurs combinaisons.

7. Composé selon l'une quelconque des revendications 1 à 6, dans lequel l'ignifuge solide est un organo-phosphinate et dans lequel le composé comprend en outre un polyphosphate de polyammonium en tant qu'ignifuge solide.

8. Composé selon l'une quelconque des revendications 1 à 7, dans lequel le polymère oléfinique nucléé est un homopolymère de polypropylène nucléé.

9. Composé selon l'une quelconque des revendications 1 à 8, dans lequel le composé comprend en outre des promoteurs d'adhérence ; des antioxydants ; des biocides, des antibactériens, des fongicides et des agents anti-moisissure ; des agents antivoile ; des agents antistatiques ; des agents de liaison, d'expansion ou de moussage ; des dispersants ; des charges ou des extendeurs ; des agents de suppression de fumée ; des formeurs de charbon dilatables ; des modificateurs de choc ; des initiateurs ; des lubrifiants ; des micas, des pigments, des colorants ou des teintures ; des adjuvants de traitement ; des agents de libération ; des silanes, des titanates ou des zirconates ; des agents de glissement ou antiblocage ; des agents de stabilisation ; des stéarates ; des agents poisseux ; des absorbeurs d'ultraviolet ; des régulateurs de viscosité ; des cires ; et leurs combinaisons.

10. Composé selon l'une quelconque des revendications 1 à 9, sous la forme d'une couche isolante enveloppant une ligne électrique protégée ou sous la forme d'une couche de gainage enveloppant une ligne électrique protégée.

11. Article en plastique fait d'un composé selon l'une quelconque des revendications 1 à 9.

12. Article en plastique selon la revendication 11, sous la forme d'une pièce électrique ou d'une pièce électronique.

13. Ligne électrique protégée, comprenant :
(a) un fil ou un câble ayant une longueur axiale et
(b) au moins une couche du composé selon l'une quelconque des revendications 1 à 9 enveloppant la longueur axiale du fil ou du câble.

14. Ligne électrique protégée selon la revendication 13, sous la forme d'un fil.

15. Ligne électrique protégée selon la revendication 13, sous la forme d'un câble.
